## Europäisches Patentamt

## European Patent Office

## Office européen des brevets

(19)

(11) Veröffentlichungsnummer: **0 226 095**
**B1**

(12) **EUROPÄISCHE PATENTSCHRIFT**

(45) Veröffentlichungstag der Patentschrift:
23.05.90

(51) Int. Cl.⁵: **A23F 5/02**

(21) Anmeldenummer: **86116512.4**

(22) Anmeldetag: **27.11.86**

(54) **Verfahren und Vorrichtung zur Verbesserung von Röstkaffee.**

(30) Priorität: **14.12.85 DE 3544265**

(43) Veröffentlichungstag der Anmeldung:
**24.06.87 Patentblatt 87/26**

(45) Bekanntmachung des Hinweises auf die Patenterteilung:
**23.05.90 Patentblatt 90/21**

(84) Benannte Vertragsstaaten:
**AT BE CH DE ES FR GB IT LI LU NL SE**

(56) Entgegenhaltungen:
**BE-A- 506 444**
**FR-A- 413 966**

(73) Patentinhaber: **Jacobs Suchard GmbH,**
**Langemarckstrasse 8-20, D-2800 Bremen 1(DE)**

(72) Erfinder: **Bonne, Harry, In der Appenhalten 26,**
**CH-8706 Meilen(CH)**

(74) Vertreter: **Bolte, Erich, Dipl.-Ing. et al, Patentanwälte**
**Dipl.-Ing. Hans Meissner Dipl.-Ing. Erich Bolte**
**Hollerallee 73, D-2800 Bremen 1(DE)**

**Beschreibung**

Die Erfindung betrifft Verfahren und Vorrichtung zur qualitativen bzw. geschmacklichen Verbesserung von Röstkaffee.

Der Geschmack von Röstkaffee bzw. von Röstkaffeegetränken ist wesentlich bestimmt durch die Auswahl des Rohkaffees, nämlich der Rohkaffee-Provenienz. Rohkaffee der Gattung "Columbia mild" ergibt einen geschmacklich erstklassigen Röstkaffee. Im Gegensatz dazu zählen beispielsweise die "Robusta"-Sorten zu den qualitativ geringerwertigen Kaffees.

Der Erfindung liegt die Aufgabe zugrunde, zu einer Verbesserung der Qualität, nämlich des Geschmacks bzw. des Aromas und auch der Färbung aufgrund des Röstens beizutragen, insbesondere bei Rohkaffee minderer Provenienz.

Zur Lösung dieser Aufgabe ist das erfindungsgemäße Verfahren dadurch gekennzeichnet, daß Rohkaffee mit Sacchariden angereichert wird.

Abweichend von dem bisherigen Bemühen zur qualitativen, insbesondere geschmacklichen Verbesserung von Röstkaffee wendet sich die Erfindung dem Rohkaffee zu. Eine Anreicherung des Rohkaffees mit Sacchariden führt überraschenderweise zu einer merklichen, meßbaren und somit beeinflußbaren Verbesserung des Röstkaffees in bezug auf Geschmack (Aroma) und Färbung aufgrund des Röstens. Rohkaffee hat einen naturgegebenen Gehalt an Mono- und Disacchariden, und zwar in der Größenordnung von 4 % bis 8 %. Über diesen natürlichen Gehalt hinaus werden dem Rohkaffee erfindungsgemäß weitere Saccharide zugeführt und der so vorbehandelte Rohkaffee danach in üblicher Weise geröstet. Überraschenderweise können durch dieses Verfahren Kaffee-Provenienzen minderer Qualität auf den Standard hochwertiger Kaffee-Sorten gebracht werden.

Für die Anreicherung des Rohkaffees kommt das breite Spektrum der Saccharide in Betracht. Besonders günstige Ergebnisse konnten jedoch bei Verwendung von Di- und/oder Mono-Sacchariden festgestellt werden.

Die geschmackliche bzw. qualitative Verbesserung des Rohkaffees läßt sich anhand der Untersuchung von Röstkaffee feststellen, und zwar zum Beispiel durch den Säuregehalt im Röstkaffee. Durch Zugabe von Sacchariden zum Rohkaffee und Absorption ist es möglich, Kaffeesorten einfacher Provenienz qualitativ, nämlich hinsichtlich des Säuregehalts, auf das Niveau hochwertiger Kaffees zu verbessern. Es handelt sich dabei um die geschmacklich relevanten "feinen" Säuren, die durch das erfindungsgemäße Verfahren im Röstkaffee angereichert werden. Darüber hinaus werden überraschenderweise auch für bestimmte einfache Provenienzen typische unerwünschte Geschmacksnuancen im Röstkaffee beseitigt. Auch ist die Färbung aufgrund der Vorbehandlung ansprechender.

Aufgrund der Erkenntnisse eignet sich Saccharose besonders vorteilhaft für die Anreicherung des Rohkaffees. Durch die Zuführung von Saccharose zum Rohkaffee durch Absorption wird einerseits eine deutliche Erhöhung des Säureanteils im Röstkaffee erreicht und zum anderen auch die geschmackliche Qualität im allgemeinen verbessert. Als nahezu ebenso vorteilhaft hat sich die Fructose erwiesen.

Die Saccharide werden dem Rohkaffee als wäßrige Lösung zugeführt Hierfür bieten sich zwei Verfahren als besonders vorteilhaft an.

Bei einem dieser Verfahren wird die Menge der Lösung so gewählt, daß diese von dem zu behandelnden Rohkaffee vollständig absorbiert wird. Dieses Ergebnis tritt dann ein, wenn die Menge der wäßrigen, mindestens ein Saccharid enthaltenden Lösung weniger als dem 0,9fachen, vorzugsweise etwa dem 0,5fachen, des Trockengewichts des Rohkaffees entspricht. Die Menge an Saccharid in der Lösung beträgt maximal das 0,15fache, insbesondere das 0,06fache, des Trockengewichts des Rohkaffees.

Um eine optimale Verteilung des Saccharids über die Rohkaffeebohnen der Charge zu gewährleisten, wird die vorstehende Behandlung in einem Mischer durchgeführt, in dem Extrakt (Lösung) und Rohkaffee umgewälzt werden. Alternativ kann der Rohkaffe durch Förderorgane an eine Stelle gebracht werden, wo der Rohkaffee mit dem durch eine Pumpe umlaufend geförderten Extrakt bis zur völligen Absorption immer wieder in Berührung gebracht wird.

Bei dem anderen erfindungsgemäßen Verfahren wird eine Lösungsmenge eingesetzt, die größer ist als die maximal vom Rohkaffee aufzunehmende. In der Praxis wird die Menge der wäßrigen Lösung vorzugsweise so gewählt, daß der Rohkaffee (Charge) ständig benetzt ist. Durch fortwährenden Umlauf des Lösungsmittels wird eine homogene Aufnahme des Saccharids durch den Rohkaffee gewährleistet. Um zu vermeiden, daß die wäßrige Lösung des Saccharids aus dem Rohkaffee wasserlösliche Kaffee-Inhaltsstoffe - außer Saccharid - entfernt, wird ein Extraktionsgleichgewicht zwischen der Lösung und dem Rohkaffee hergestellt. Zu diesem Zweck wird eine Lösung eingesetzt, die alle im Rohkaffee vorhandenen wasserlöslichen Bestandteile enthält. Mengenverhältnis und Konzentration dieser Substanzen sind so gewählt, daß sich die Zusammensetzung eines mit Wasser gesättigten (aufgequollenen) Rohkaffees in bezug auf diese Bestandteile auch bei längerer Berührung mit der Lösung nicht verändert.

Dieses Ergebnis wird z.B. dann erreicht, wenn ein originärer Rohkaffee-Extrakt mit etwa 21% (Gewichtsprozente) Trockensubstanz als Lösung eingesetzt wird. In diesem Gleichgewichtsextrakt ist das anzureichernde Saccharid im Übermaß vorhanden. Dieses wird deshalb vom Rohkaffee aus der Lösung heraus absorbiert.

Unter Beachtung des Extraktgleichgewichts kann Rohkaffee in einem oder mehreren hintereinandergeschalteten Behandlungsbehälter(n) mit Sacchariden angereichert werden. Um die Behandlungszeit so kurz wie möglich zu halten, wird erfindungsgemäß die Saccharid-Konzentration des in den (ersten) Behandlungsbehälter eintretenden Extrakts mit geeigneten technischen Mitteln überwacht und auf einem konstanten (hohen) Niveau gehalten, von z.B. 10 % bis 50 %, vorzugsweise 25 %.

Zur Durchführung des vorstehend erläuterten Verfahrens wird erfindungsgemäß im voraus das Absorptionsverhalten der jeweiligen Provenienz und/oder Mischung des zu behandelnden Rohkaffees experimentell (empirisch) bestimmt. Hieraus ergibt sich die erforderliche Kontaktzeit der Lösung mit dem Rohkaffee bei vorgegebener Saccharid-Konzentration.

Alternativ kann erfindungsgemäß die insgesamt einer Charge des Rohkaffees zugeführte Saccharidmenge gemessen (durch Wägung) und daraus der Grad der Anreicherung des Rohkaffees mit diesem Saccharid ermittelt werden.

Zur Beendigung des Absorptionsverfahrens wird der angereicherte Rohkaffee von der Lösung getrennt. Der Rohkaffee wird kurzzeitig mit Wasser gespült, um an der Oberfläche abgelagerte Saccharidanteile zu beseitigen. Danach wird der Rohkaffee zur Gewährleistung der Lagerfähigkeit auf den ursprünglichen Feuchtegehalt (8 % bis 12 %) getrocknet. Damit ist der Rohkaffee für das Röstverfahren vorbereitet.

Nach dem erfindungsgemäßen Verfahren behandelte Rohkaffees verschiedener Provenienzen zeigen eine deutliche Erhöhung des Gehalts an "feinen" Säuren im Röstkaffee. In der Tabelle sind Untersuchungsergebnisse aufgrund von Versuchsbeispielen zusammengestellt.

Die Tabelle zeigt vergleichende Untersuchungen und deren Ergebnisse der Kaffee-Provenienzen Columbia (Qualitätskaffee), Santos und Robusta. Die beiden letztgenannten Kaffeesorten sind von minderer Qualität. Die für jede Provenienz aufgeführten Zahlen beziehen sich einmal auf unbehandelten Rohkaffee bzw. daraus hergestellten Röstkaffee (Spalte "Columbia orig." ...). Des weiteren ist Kaffee untersucht worden, bei dem der Rohkaffee lediglich mit Wasser angereichert, also gequollen war (Columbia + $H_2O$). Die weiteren Spalten zeigen jeweils Versuchsreihen mit einem unterschiedlichen Grad von Anreicherung des Rohkaffees mit Saccharose. Wie die Zahlen belegen, führen die Bereiche einer Anreicherung des Rohkaffees mit 4 % bis 10 % Saccharose zu den günstigen Ergebnissen in bezug auf den pH-Wert sowie die Säurezahl (gemessene freie Säure) und damit in bezug auf den Anteil an "feinen" Säuren im Röstkaffee. Bei einer Anreicherung des Rohkaffees mit Saccharose zwischen 6 % und 8 % liegt ein Optimum, welches im einzelnen von den angestrebten Geschmacksnuancen abhängt. Die Angaben über den zugeführten Saccharidanteil sind Gewichtsprozente bezogen auf die Einwaage Rohkaffee.

Wie weiterhin festgestellt werden konnte, führt die Anreicherung von Sacchariden im Rohkaffee durch die Röstung zu einer Vermehrung von Substanzen im wasserdampfflüchtigen Teil des Aromas. Es handelt sich dabei um folgende: Furane allgemein und speziell Furfural, 5-Methylfurfural, 2-Acetylfuran, 2-Methyltetrahydrofuran-3-on, weiterhin HMF (Hydroxymethylfurfural) und Furaneol. Es ist anzunehmen, daß diese Substanzen ebenfalls günstige Auswirkungen auf den Geschmack des Röstkaffees bzw. des Kaffee-Aufgusses haben.

Ausführungsbeispiele für Vorrichtungen zur Durchführung des Verfahrens werden nachfolgend anhand der Zeichnungen erläutert. Es zeigt:

Fig. 1 einen Abschnitt einer um eine Horizontale drehbare Trommel in perspektivischer Darstellung,
Fig. 2 einen aufrechten Behälter für die Behandlung von Rohkaffee im schematischen Vertikalschnitt,
Fig. 3 eine schematisiert dargestellte Anlage für die Anreicherung von Rohkaffee im Durchlaufverfahren.

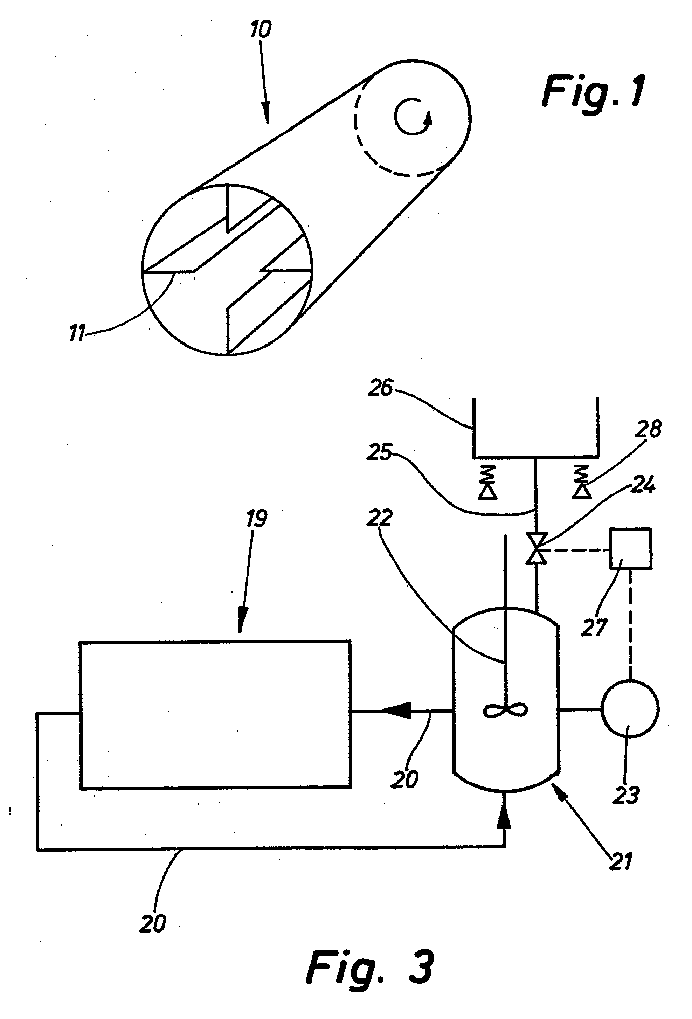

Die in Fig. 1 gezeigte einfache Ausführung einer Behandlungsvorrichtung besteht im wesentlichen aus einer horizontal gerichteten, drehbar angetriebenen Trommel 10. In dieser sind Organe angeordnet, nämlich Leitbleche 11, die aufgrund ihrer Position und Gestalt eine Vermischung von Röstkaffee und saccharidhaltiger, wäßriger Lösung infolge der Drehung der Trommel bewirken. Die Leitbleche 11 können durch entsprechende Gestaltung so ausgebildet sein, daß eine Förderwirkung erzielbar ist. Des weiteren ist die Trommel zweckmäßigerweise mit einer Heizeinrichtung versehen, um das Gemisch aus Lösung und Rohkaffeebohnen auf eine höhere Temperatur von etwa 80 C zu bringen. Eine Charge Röstkaffee mit einer hierauf abgestimmten, dosierten Menge des wäßrigen Lösungsmittels mit mindestens einem Saccharid erstreckt sich über eine Dauer von vorzugsweise etwa 1,5 Stunden. Die Lösung soll dann vollständig durch den Rohkaffee absorbiert sein. Durch kurzzeitige Spülung der Rohkaffeebohnen können an der Außenseite haftende Saccharidreste, Häutchen etc. beseitigt werden. Danach wird der Rohkaffee getrocknet und in üblicher Weise geröstet. Die Trommel 10 ist an den Stirnseiten mit Stirnwandungen versehen, von denen mindestens eine eine Öffnung aufweist.

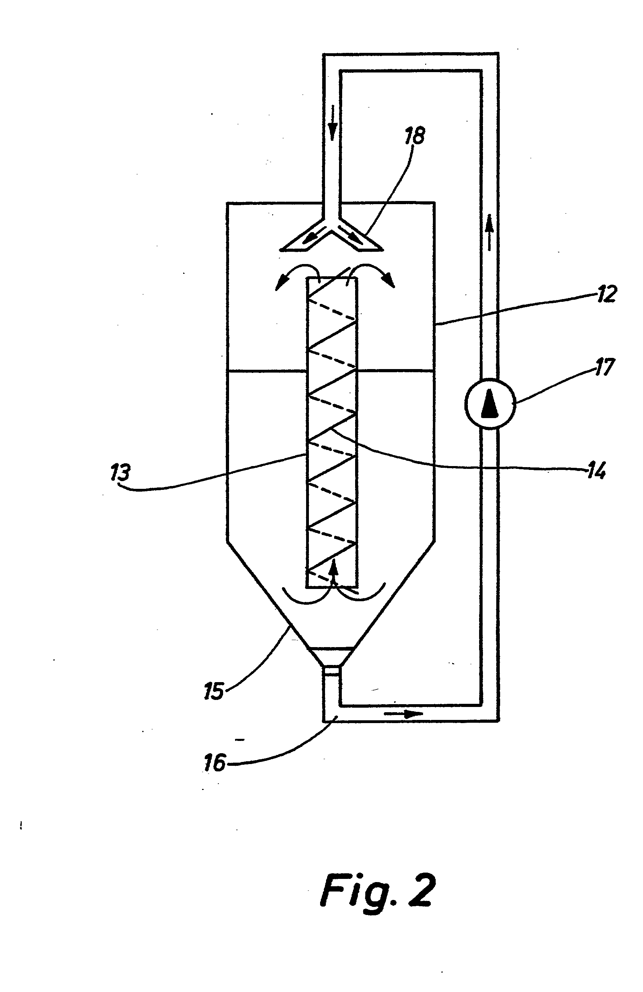

Gemäß Fig. 2 besteht die Behandlungsvorrichtung aus einem aufrechten, beispielsweise zylindrischen Behälter 12, in dem ebenfalls eine Rohkaffee-Charge und eine dosierte Menge der wäßrigen Lösung Aufnahme finden. Mittig innerhalb des Behälters 12 ist in einem aufrechten Rohr 13 eine Förderschnecke 14 gelagert und drehend angetrieben. Durch diese wird in dem Rohr 13 der Rohkaffee ständig aufwärts gefördert bis zum oberen Ende. Der Rohkaffee wird seitlich in den Behälter zurückgeworfen, so daß ein ständiger Umlauf des Rohkaffees stattfindet. Das Lösungsmittel wird im Bereich eines unteren, trichterförmigen Behälteransatzes 15 über eine Umlaufleitung 16 durch eine Pumpe 17 ständig abgefördert und im oberen Bereich des Behälters 12 dem Rohkaffee wieder zugeführt, und zwar durch Sprühdüsen 18, die die wäßrige Lösung durch Sprühen auf dem aus dem Rohr 13 austretenden Rohkaffee verteilen.

Die Anlage gemäß Fig. 3 ermöglicht die Behandlung von Rohkaffee im Durchlaufbetrieb. Die wäßrige Lösung mit einem Saccharid erhöhter Konzentration wird durch einen Behandlungsbehälter 19 hindurchgeleitet, in dem sich eine Charge Rohkaffee befindet. Die Lösung wird über eine Umlaufleitung 20 gefördert. Die Zusammensetzung der Lösung ist so gewählt, daß alle wasserlöslichen Rohkaffee-Inhaltsstoffe - außer dem anzureichernden Saccharid - in einer solchen Konzentration vorhanden sind, daß sie sich im Gleichgewicht mit den entsprechenden Kaffee-Inhaltsstoffen im Rohkaffee befinden. Dieser ist vorzugsweise vor Beginn des Verfahrens mit Wasser bis zur Sättigung angereichert (aufgequollen), um die Aufnahme von Wasser aus der Lösung während der Behandlung ebenfalls zu vermeiden.

Die Umlaufleitung 20 wird durch einen Lösungsbehälter 21 mit Rührwerk 22 geführt. In diesem wird die Lösung in bezug auf den Saccharidgehalt auf eine konstant gehaltene Konzentration ergänzt. Zu diesem Zweck ist dem Lösungsbehälter ein Meßgerät 23 zur fortlaufenden Feststellung der Saccharid-Konzentration in der Lösung zugeordnet. Nach Maßgabe der Meßergebnisse wird dem Lösungsbehälter 21 jeweils die erforderliche Menge des

Tabelle

| | pH-Wert | freie Säure | Farbwert |
|---|---|---|---|
| | | ml 1n NaOH/(100 g TM) | |
| Columbia, orig. | 5,10 | 29,8 | 9,5 |
| Columbia + H$_2$O | 5,08 | 30,1 | 9,9 |
| Columbia + 2% Saccharose | 5,08 | 30,4 | 9,2 |
| Columbia + 4% Saccharose | 5,02 | 31,0 | 8,5 |
| Columbia + 6% Saccharose | 4,95 | 31,6 | 8,3 |
| Columbia + 8% Saccharose | 4,87 | 33,3 | 8,4 |
| Columbia + 10% Saccharose | 4,87 | 35,9 | 8,3 |
| Santos, orig. | 5,31 | 25,8 | 8,3 |
| Santos + H$_2$O | 5,24 | 27,3 | 8,6 |
| Santos + 2% Saccharose | 5,20 | 27,3 | 8,4 |
| Santos + 4% Saccharose | 5,19 | 27,4 | 8,3 |
| Santos + 6% Saccharose | 5,06 | 29,9 | 8,6 |
| Santos + 8% Saccharose | 5,04 | 31,3 | 8,6 |
| Santos + 10% Saccharose | 4,99 | 32,1 | 9,1 |
| Phill. Robusta, orig. | 5,77 | 20,9 | 7,6 |
| Phill. Robusta + H$_2$O | 5,62 | 24,6 | 8,3 |
| Phill. Robusta + 2% Saccharose | 5,46 | 25,7 | 8,7 |
| Phill. Robusta + 4% Saccharose | 5,37 | 28,0 | 8,7 |
| Phill. Robusta + 6% Saccharose | 5,25 | 30,1 | 9,2 |
| Phill. Robusta + 8% Saccharose | 5,15 | 33,1 | 9,2 |
| Phill. Robusta + 10% Saccharose | 5,17 | 31,9 | 8,3 |

Saccharids zugeführt, und zwar durch zeitweiliges Öffnen eines Ventils 24 in einer Zuführungsleitung 25 von einem Saccharidbehälter 26 zum Lösungsbehälter 21. Das Ventil 24 wird durch einen Regler 27 betätigt, der wiederum die Meßsignale des Meßgeräts 23 auswertet. Die aus dem Lösungsbehälter 21 austretende und dem Behandlungsbehälter 19 zugeführte wäßrige Lösung hat somit stets eine gleichbleibende Saccharid-Konzentration.

Wenn die Wassermenge in der umlaufenden Lösung konstant gehalten wird, ist dem Lösungsbehälter 21 das betreffende Saccharid wasserfrei (trocken) zuzuführen. Die Gesamtmenge des während eines Behandlungsverfahrens dem Rohkaffee zugeführten Saccharids ergibt sich aus der Menge, die dem Saccharidbehälter 26 entnommen wird. Diese Nachschußmenge wird gemessen und ergibt Aufschluß über den Grad der Anreicherung des Rohkaffees mit dem Saccharid. Zu diesem Zweck kann beispielweise der Saccharidbehälter 26 mit einer Waage 28 verbunden sein.

Die Vorrichtung gemäß Fig. 3 läßt sich analog auch bei einer Mehrzahl von in Reihe hintereinander angeordneten Behandlungsbehältern (Kolonnen) durchführen, wobei jeweils nach einer gewissen Zeit eine Kolonne mit in dem gewünschten Umfange angereichertem Rohkaffee entnommen und eine Kolonne mit anbehandeltem Rohkaffee zugeführt wird. Auch hier ergibt sich der Grad der Anreicherung des Rohkaffees aus der Gesamtmenge des während der Behandlung zugeführten Saccharids.

Beschreibung eines Ausführungsbeispiels

Es wird eine Saccharoselösung hergestellt und auf etwa 70° C erhitzt. Die Konzentration der Saccharoselösung beträgt 16,66 %, das heißt 4 kg Saccharose in 20 kg Wasser.

50 kg Rohkaffee werden in einen beheizbaren Extrakteur mit Ablaß gegeben, ebenfalls bei einer Temperatur von etwa 70° C. Danach wird die Saccharoselösung in den Extrakteur mit Rohkaffee gegeben. Bei Aufrechterhaltung der Temperatur von etwa 70° C wird die Saccharoselösung während etwa 1,5 Stunden umgepumpt, bis die Lösung vollständig von dem Rohkaffee aufgenommen worden ist. Dabei quillt der Rohkaffee auf.

Die feuchten Rohkaffeebohnen werden in einen Wirbelschichttrockner umgefüllt und bei etwa 100° C während etwa 90 Minuten getrocknet. Die Trockendauer ist so gewählt, daß der Rohkaffee etwa den ursprünglichen Wassergehalt erhält.

Anschließend werden die so behandelten Rohkaffeebohnen normal geröstet.

**Patentansprüche**

1. Verfahren zur qualitativen Verbesserung von Röstkaffee durch Anreicherung von Rohkaffee mit Saccharid, bei dem das Saccharid dem Rohkaffee in wäßriger Lösung zugeführt wird, dadurch gekennzeichnet, daß die wäßrige Lösung außer dem anzureichernden Saccharid einen Extrakt aller wasserlöslichen Kaffee-Inhaltsstoffe des Rohkaffees enthält, wobei die Konzentration der Rohkaffee-Inhaltsstoffe – außer dem anzureichernden Saccharid – derart gewählt wird, daß die Inhaltsstoffe im Rohkaffee einerseits und in der Lösung andererseits im Gleichgewicht miteinander stehen.

2. Verfahren nach Anspruch 1, dadurch gekennzeichnet, daß die wäßrige Lösung in einer Menge eingesetzt wird, die größer ist als die maximal vom Rohkaffee aufzunehmende.

3. Verfahren nach Anspruch 1 oder 2, dadurch gekennzeichnet, daß das Saccharid in wäßriger Lösung im Überschuß enthalten ist.

4. Verfahren nach Anspruch 3 sowie einem oder mehreren der weiteren Ansprüche, dadurch gekennzeichnet, daß die Saccharidkonzentration der wäßrigen Lösung 10 – 50% beträgt.

5. Verfahren nach einem oder mehreren der Ansprüche 1–4, dadurch gekennzeichnet, daß die Behandlung des Rohkaffees mit der Saccharidlösung bei einer Temperatur oberhalb der Raumtemperatur bis zu 120°C erfolgt, insbesondere bei etwa 80°C.

6. Verfahren nach einem oder mehreren der vorhergehenden Ansprüche 1–5, dadurch gekennzeichnet, daß der Rohkaffee vor der Behandlung mit der Lösung mit Wasser bis zur Sättigung angereichert (aufgequollen) wird, wobei die Lösung – bis auf das anzureichernde Saccharid – in bezug auf die übrigen Kaffee-Inhaltsstoffe und Wasser im Gleichgewicht mit den Rohkaffeebohnen ist.

7. Verfahren nach einem oder mehreren der vorangehenden Ansprüche 1 bis 6, dadurch gekennzeichnet, daß die wäßrige Lösung aus Saccharid und Rohkaffee-Extrakt in einem Kreislauf durch den Rohkaffee hindurchgeleitet wird, daß dabei in der aus dem Rohkaffee austretenden Lösung die Saccharid-Konzentration gemessen und entsprechend auf die Anfangs-Saccharid-Konzentration ergänzt wird, so daß die wieder in den Rohkaffee eintretende wäßrige Lösung auf einem konstanten Niveau im Bereich von 10 – 50 Gew.-% gehalten wird.

**Claims**

1. Process for improving the quality of roasted coffee by the enrichment of raw coffee with saccharide, in which the saccharide is added to the raw coffee in aqueous solution, characterized in that the aqueous solution contains, in addition to the enriching saccharide, an extract of all water-soluble coffee ingredients of the raw coffee, the concentration of the raw-coffee ingredients – in addition to the enriching saccharide – being selected in such a way that the ingredients in the raw coffee on the one hand and in the solution on the other hand are in equilibrium with one another.

2. Process according to claim 1, characterized in that the aqueous solution is used in a quantity which is larger than the maximum quantity to be absorbed by the raw coffee.

3. Process according to claim 1 or 2, characterized in that the saccharide is contained in excess in the aqueous solution.

4. Process according to claim 3 and one or more of the further claims, characterized in that the saccharide concentration of the aqueous solution is 10 – 50%.

5. Process according to one or more of claims 1 to 4, characterized in that the treatment of the raw coffee with the saccharide solution is carried out at a temperature above room temperature up to 120°C, especially at approximately 80°C.

6. Process according to one or more of the preceding claims 1 to 5, characterized in that the raw coffee, before being treated with the solution, is enriched (swollen) with water to saturation, the solution –

with the exception of the enriching saccharide – being in equilibrium with the raw-coffee beans in terms of the remaining coffee ingredients and water.

7. Process according to one or more of the preceding claims 1 to 6, characterized in that the aqueous solution of saccharide and raw-coffee extract is conveyed through the raw coffee in a cycle, and in that at the same time the saccharide concentration in the solution flowing out of the raw coffee is measured and an appropriate addition to reach the initial saccharide concentration is made, so that the aqueous solution flowing into the raw coffee again is maintained at a constant level in the range of 10 to 50% by weight.

**Revendications**

1. Procédé pour améliorer la qualité du café torréfié par enrichissement du café vert par du saccharide, dans lequel le saccharide est amené en solution aqueuse au café vert, caractérisé en ce que la solution aqueuse contient, à l'exception du saccharide à enrichir, un extrait de tous les constituants solubles dans l'eau du café vert, la concentration des constituants de café vert étant, à l'exception du saccharide à enrichir, sélectionnée de telle façon que les constituants soient en équilibre mutuel, d'une part, dans le café vert, et, d'autre part, dans la solution.

2. Procédé suivant la revendication 1, caractérisé en ce que la solution aqueuse est introduite en une quantité qui est plus grande que celle à absorber au maximum par le café vert.

3. Procédé suivant l'une des revendications 1 et 2, caractérisé en ce que le saccharide est contenu en excès dans la solution aqueuse.

4. Procédé suivant la revendication 3 ainsi que suivant une ou plusieurs des autres revendications, caractérisé en ce que la concentration en saccharide de la solution aqueuse est de 10 à 50%.

5. Procédé suivant une ou plusieurs des revendications 1 à 4, caractérisé en ce que le traitement du café vert par la solution de saccharide s'effectue à une température supérieure à la température ambiante, allant jusqu'à 120°C, en particulier d'environ 80°C.

6. Procédé suivant une ou plusieurs des revendications précédentes 1 à 5, caractérisé en ce que le café vert est, avant le traitement par la solution, enrichi (gonflé) en eau jusqu'à la saturation, la solution étant, à l'exception du saccharide à enrichir, en équilibre avec les graines de café vert, en ce qui concerne les autres constituants de café et l'eau.

7. Procédé suivant une ou plusieurs des revendications 1 à 6, caractérisé en ce que la solution aqueuse de saccharide et d'extrait de café vert est passée dans un circuit au travers du café vert, en ce que la concentration de saccharide est mesurée dans la solution sortant du café vert et est complétée d'une manière correspondant à la concentration en saccharide de départ, de façon que la solution aqueuse pénétrant à nouveau dans le café vert soit maintenue à un niveau constant de l'ordre de 10 à 50% en poids.

*Fig.1*

*Fig. 3*

**Fig. 2**